# EUROPÄISCHE PATENTANMELDUNG

(11) **EP 1 143 288 A1**
(43) Veröffentlichungstag der Anmeldung: **10.10.2001**
(21) Anmeldenummer: 01101777.9
(22) Anmeldetag: 26.01.2001
(51) Int. Cl.: G02F 1/13357, G02B 27/01

(54) **Farb-Head-up Display, insbesondere für ein Fahrzeug**

(30) Priorität: 05.04.2000 DE 10016817
(71) Anmelder: Mannesmann VDO AG, 60388 Frankfurt am Main (DE)
(72) Erfinder: Hähl, Manfred, 63165 Mühlheim (DE)
(74) Vertreter: Keller, Thomas, Dipl.-Ing. (FH)

(57) **Zusammenfassung**

Bei einem Farb-Head-up Display, insbesondere für Fahrzeuge, bei dem das Licht einer Lichtquelle (2) durch eine zumindest teilweise lichtdurchlässige Anzeige (3) gesendet wird und auf eine Scheibe (6) projizierbar ist, ist vorgesehen, daß eine Vielzahl von roten, blauen und grünen Leuchtdioden ohne Verpackung auf einem gemeinsamen Träger angeordnet sind, daß eine Wärmeabfuhrvorrichtung zum Kühlen der Leuchtdioden vorhanden ist.

## Beschreibung

Die Erfindung betrifft ein Farb-Head-up Display, insbesondere für ein Fahrzeug.

Aus dem Stand der Technik sind Farb-Head-up Displays mit den verschiedenartigsten Lichtquellen bekannt, wie beispielsweise Leuchtstofflampen oder Halogenlampen bekannt, bei denen das Licht der Lichtquelle durch eine zumindest teilweise Licht durchlässige Anzeige gesendet wird und auf eine Scheibe projezierbar ist. Halogenlampen haben den Nachteil der relativ kurzen Haltbarkeit (ca. 500 - 1000 Betriebsstunden). Durch die Einbaulage bei Head-up Displays in Kraftfahrzeugen ist ein Wechsel der Lampen nur durch geschultes Fachpersonal möglich. Bei Leuchtstofflampen kann nur ein geringer Teil der Lichtenergie für die Beleuchtung wegen der geometrischen Abmessungen der Leuchtstofflampe und dem kleinen nutzbaren Bereich für eine Head-up Display Optik verwendet werden.

Weiterhin ist bei Kraftfahrzeug Head-up Displays ein großer Dimmbereich der Lichtquelle erforderlich, da die Umgebungshelligkeit um das Kraftfahrzeug je nach Tageszeit und Umgebung sich stark verändert. Da sich bei Dimmung von Halogen- und Leuchtstofflampen deren spektrale Eigenschaften verändern, ist eine farbneutrale Dimmung höchstens unter hohem baulichen Aufwand mit entsprechendem Platzbedarf möglich.

Aufgabe der Erfindung ist es daher, ein Farb-Head-up Display anzugeben, das kompakt aufgebaut ist und das in einem weiten Bereich dimmbar ist.

Diese Aufgabe wird dadurch gelöst, daß eine Vielzahl von roten, grünen und blauen Leuchtdioden ohne Verpackung auf einem gemeinsamen Träger angeordnet sind und das eine Wärmeabfuhrvorrichtung zum Kühlen der Leuchtdioden vorhanden ist. Durch den Verzicht auf die sonst übliche Verpackung (Gehäuse der Leuchtdioden) können die einzelnen Leuchtdioden sehr dicht nebeneinander angeordnet werden. Dadurch wird eine hohe Leuchtdichte erreicht, die zum Durchleuchten der Anzeige benötigt wird, um auch bei hellen Tageslichtverhältnissen eine optimale optische Darstellung zu erzielen. Die Kühleinrichtung schützt dann die sehr dicht nebeneinanderliegend angeordneten Leuchtdioden vor einer thermischen Überlastung.

Die Vielzahl der Leuchtdioden kann in Form eines kompakten Feldes angeordnet sein. Das kompakte Feld kann beispielsweise als Matrix ausgestaltet sein. Hierdurch kann das Bonden der einzelnen Dioden einfach durchgeführt werden. Es ist beispielsweise auch möglich, die Anordnung der Dioden spiralförmig oder in Form ineinanderliegender konzentrischer Kreise auszugestalten.

Dadurch, daß die Anzahl der Leuchtdioden einer Farbe an die spektrale Empfindlichkeit des Auges und den spektralen Wirkungsgrad der Dioden angepaßt sind, können die einzelnen Leuchtdioden bei voller gewünschter Leuchtstärke in einem bestimmten Farbton, insbesondere bei weissem Licht voll ausgenutzt werden, da die verschiedenen Farben dann bei einem Betrachter in etwa das gleiche Helligkeitsempfinden hervorrufen und eine Dimmung einer oder mehrerer Farbgruppen nicht oder nur kaum erforderlich ist, um den gewünschten Farbton (insbesondere bei gewünschtem weissen Licht) zu erhalten.

Dadurch, daß das kompakte Feld weitgehend eine runde Form aufweist, kann die Lichtstärke der vorhandenen Leuchtdioden voll ausgenutzt werden, wenn das Licht durch eine Linsenoptik gesendet wird. So wird Material und insbesondere Energie eingespart und damit auch die Wärmeentwicklung durch die Leuchtdioden auf das notwendige Maß reduziert.

Besonders einfach ist die Ausgestaltung des kompakten Feldes, wenn die Leuchtdioden als Chippads ausgestaltet sind, die jeweils auf einem metallischen Trägermaterialfeld aufgebracht sind und ein Anschluß der Leuchtdiode mit diesem elektrisch leitend verbunden ist. Die Leuchtdiode läßt sich im vorbeschriebenen Fall besonders einfach mit elektrischer Energie versorgen, wenn jeweils ein Bond-Draht mit der Leuchtdiode und ein weiterer mit dem metallischen Trägermaterialfeld verbunden ist. Durch diese Ausgestaltung ist eine einfache Reihenschaltung mehrerer Leuchtdioden realisierbar, wenn die gleichzeitig die Trägermaterialfelder benachbarter Dioden gegeneinander elektrisch isoliert sind.

Dadurch, daß mehrere Leuchtdioden in Reihe geschaltet sind, benötigt der integrierte Schaltkreis weniger externe Anschlüsse. Außerdem wird die Gefahr von Hitze-Spots einzelner Leuchtdioden stark reduziert.

Dadurch, daß mehrere Leuchtdioden einer Farbe in Reihe geschaltet sind, sind die verschiedenen Farben unterschiedlich dimmbar und so unterschiedliche Farben darstellbar bei gleichzeitig wenig benötigten externen Anschlüssen.

Durch Verwendung eines Farb-Flüssigkristalldisplays als lichtdurchlässige Anzeige in den vorgenannten Head-up Displays ist eine einfache Farbdarstellung möglich, insbesondere dann, wenn bei der Lichtquelle die verschiedenfarbigen Leuchtdioden so angesteuert werden, daß die Lichtquelle weisses Licht aussendet.

Die Verwendung eines monochromen Flüssigkristalldisplays als lichtdurchlässige Anzeige in einem Head-up Display mit der vorbeschriebenen Lichtquelle erfordert nur ein einfaches Flüssigkristalldisplay und erlaubt dennoch eine Farbdarstellung, wenn die einzelnen Farben der Leuchtdioden in schneller Folge nacheinander ein- und ausschaltbar sind und der Betrachter infolge der Trägheit seiner Augen ein zusammengesetztes Bild wahrnimmt.

Die Erfindung wird nachfolgend anhand der Figuren näher erläutert. Es zeigen:
- Figur 1:: ein Ausführungsbeispiel eines erfindungsgemäßen Head-up Displays in einem Kraftfahrzeug
- Figur 2:: die Aufsicht auf ein besonders bevorzugtes Beispiel einer erfindungsgemäßen Lichtquelle
- Figur 3:: einen Teilschnitt eines besonders bevorzugten Beispiels einer erfindungsgemäßen Lichtquelle
- Figur 4:: die Darstellung eines Head-up Displays mit einer geteilten Lichtquelle

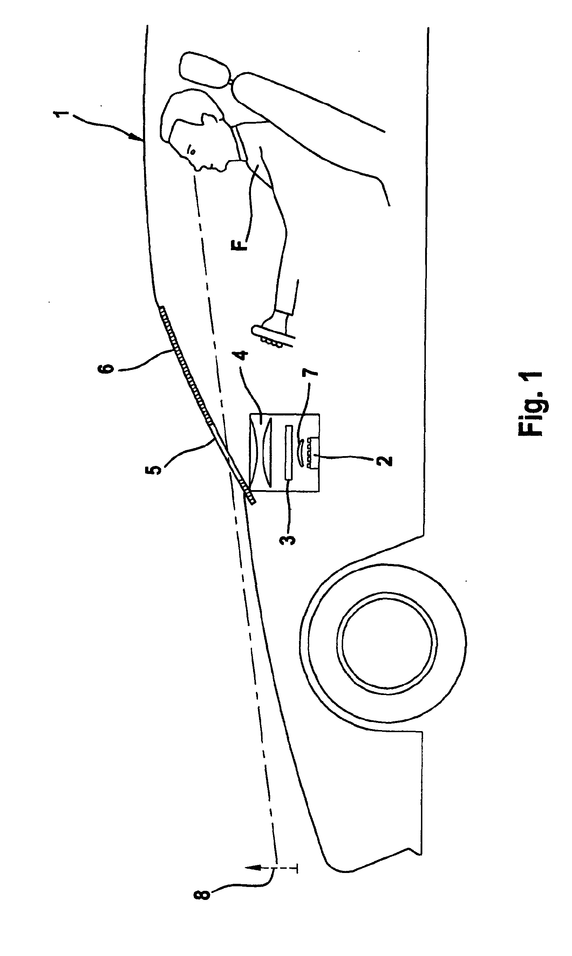

Figur 1 zeigt eine Prinzipdarstellung einer teilweise geschnittenen Seitenansicht eines in ein Kraftfahrzeug 1 eingesetzten Head-up Displays. Dieses Head-up Display besteht aus einer Lichtquelle 2, einer Kondensorlinse 7, einem Flüssigkristalldisplay 3, einer Linsenoptik 4 und einem Projektionsbereich 5 auf einer Frontscheibe 6 des Kraftfahrzeugs 1. Die Kondensorlinse 7 bewirkt, daß möglichst viel Licht der Lichtquelle 2 zum Flüssigkristalldisplay 3 gelangt. Einen guten Lichtausnutzungsgrad kann man z. B. auch dadurch erreichen, daß die Lichtquelle 2 so in einem Hohlspiegel angeordnet wird, daß nahezu alle von der Lichtquelle 2 ausgesandten Lichtstrahlen direkt oder durch Reflexion in Richtung des Flüssigkristalldisplays 3 gelangen. Das Flüssigkristalldisplay 3 ist beispielsweise als Punkt-Matrix ausgestaltet, auf dem im Beispiel ein Pfeil dargestellt ist. Das Licht der Lichtquelle 2 wird von der Kondensorlinse 7 gebündelt, durchdringt das Flüssigkristalldisplay 3 und wird durch die Linsenoptik 4 auf den Projektionsbereich 5 der Frontscheibe 6 projiziert. Ein Fahrer F des Kraftfahrzeugs 1 kann so einen Pfeil 8 mit der übrigen (nicht dargestellten) Umwelt vor dem Fahrzeug wahrnehmen. Je nach Anordnung der Lichtquelle 2, der Anzeige 3, des Projektionsbereichs 5 und eventuell der Kondensorlinse 7 oder des nicht dargestellten Hohlspiegels kann auch auf die Linsenoptik 4 verzichtet werden.

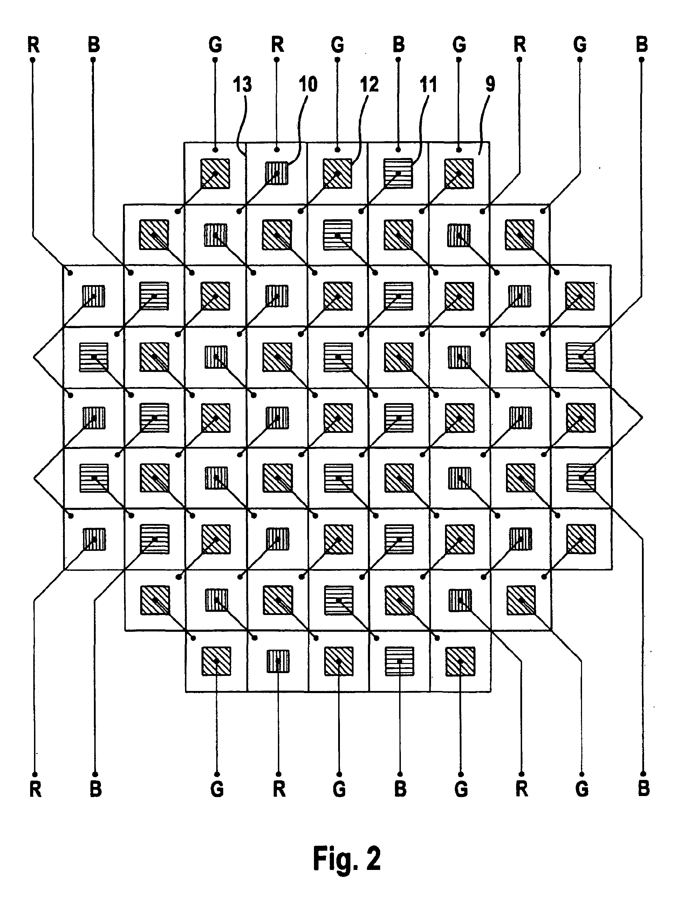

Die Aufsicht auf ein besonders bevorzugtes Ausführungsbeispiel einer besonders bevorzugten Lichtquelle 2 in Figur 2 zeigt Trägermaterialfelder 9, auf denen Leuchtdioden 10, 11, 12 in Form von Chippads angeordnet und mit den Trägermaterialfeldern 9 elektrisch leitend verbunden sind. Die Trägermaterialfelder 9 sind gleichstrommäßig von den ihnen benachbarten Trägermaterialfedern 9 durch Gräben 13 getrennt und matrixförmig angeordnet. Die Leuchtdioden mit den Bezugszeichen 10 sind rot, mit den Bezugszeichen 11 sind blau und mit den Bezugszeichen 12 sind grün. Jeweils mehrere Leuchtdioden 10, 11, 12 jeweils einer Farbe sind derart in Reihe geschaltet, daß ein Bond-Draht 15 entweder mit dem LED Chippad 10, 11, 12 oder mit dem Trägerfeld 9 verbunden ist. Hierbei sind immer mehrere Leuchtdioden einer Farbe in Reihe geschaltet. Das jeweilige Reihenende ist an Außenanschlüsse R, G, B geführt, wobei der Außenanschluß R mit roten Leuchtdioden, der Außenanschluß G mit grünen Leuchtdioden und der Außenanschluß B mit blauen Leuchtdioden verbunden ist. Man kann durch ein Nachfahren der Bond-Drähte beginnend an den Außenanschlüssen R, G, B erkennen, daß sich unter den dargestellten 69 Leuchtdioden 10, 11, 12, 19 rote Leuchtdioden 10, 16 blaue Leuchtdioden 11 und 34 grüne Leuchtdioden 12 befinden. Die verhältnismäßig hohe Anzahl von grünen Leuchtdioden 12 gegenüber den roten und blauen Leuchtdioden 10, 11 liegt daran, daß das menschliche Auge gemischtes Licht dann als weiss empfindet, wenn das Licht einen besonders hohen Anteil von grünem Licht gegenüber niedrigen Anteilen von rotem und blauem Licht aufweist.

Man erkennt weiterhin, daß die Anordnung der Leuchtdioden 10, 11, 12 nahezu eine Kreisfläche bildet. Leuchtdioden außerhalb dieser Kreisfläche würden nur den Energieverbrauch und die Wärmeentwicklung vergrößern, ohne wesentlich die Lichtausbeute zu verbessern, wenn das Licht durch die in Figur 1 dargestellte Kondensorlinse 7 gesendet wird. Ein Kreis, der die Kreisläche vollständig umschliessen kann, kann beispielsweise einen Durchmesser von sechs Millimetern aufweisen. Bei dem dargestellten Beispiel betragen die Kantenlängen der Trägerfelder 9 ca. 600µm, der roten Leuchtdiodenchippads 10 ca. 250 µm und der blauen und grünen Leuchtdiodenchippads 11,12 jeweils ca. 310µm. Es sind jedoch auch andere Abmessungen vorstellbar. Durch den geringen Durchmesser der Kreisfläche und die hohe Anzahl von Leuchtdioden (im vorstehenden Beispiel 69 Stück) erzielt die Lichtquelle 2 die erforderliche Leuchtdichte. Die Ausgestaltung der Kreisfläche könnte man auch beispielsweise dadurch realisieren, daß man die nebeneinanderliegenden Dioden in Form ineinanderliegender konzentrischer Kreise oder einer Spirale anordnet.

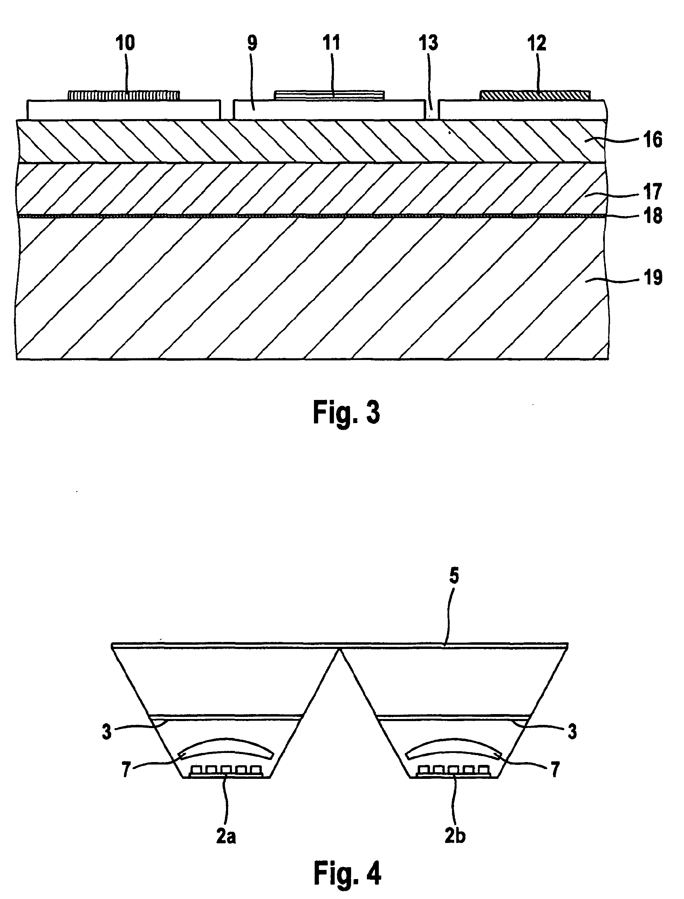

Bei dem in Figur 3 dargestellten Teilschnitt durch eine Lichtquelle 2 erkennt man die Leuchtdioden 10, 11, 12 in Form von Chippads, die elektrisch leitend mit metallischen Trägermaterialfeldern 9 verbunden und auf diesen angeordnet sind. Die Trägermaterialfelder 9 sind auf einer wärmeleitenden elektrischen Isolationsschicht 16 angeordnet. Unter der Isolationsschicht 16 befindet sich noch eine weitere wärmeleitende elektrische Isolationsschicht 17, beispielsweise aus Silicium oder Keramik, die wärmeleitend mit einem Kupferträger 19 verbunden ist, beispielsweise mit einem Leitkleber oder einer Lötschicht 18. Der Kupferträger 19 dient gleichzeitig der gleichmäßigen Wärmeverteilung in der Lichtquelle 2 und damit auch der Kühlung. Der Träger 19 kann auch aus einem anderen gut wärmeleitenden Material hergestellt und/oder mit einem Kühlkörper verbunden sein.

Eine Kühlung der Lichtquelle 2 kann beispielsweise auch durch ein Gebläse oder durch ein Peltier-Element realisiert sein.

In Figur 4 sind zwei Lichtquellen 2 vorhanden, die jeweils über eine Kondensorlinse 7 jeweils eine Anzeige 3 durchstrahlen. Diese Anordnung ist insbesondere dann sinnvoll, wenn die Höhe und die Breite des jeweils gewünschten Anzeigefeldes 5 stark voneinander abweichen. So wird das Licht der vorhandenen Leuchtdioden besser ausgenutzt. Weiterhin treten weniger Probleme infolge von Verzerrungen auf bzw. eine Unterdrückung von Verzerrungen ist leichter realisierbar. Auch ist es möglich, mit mehreren Lichtquellen 2 eine einzige Anzeige 3 zu durchstrahlen.

## Patentansprüche

1. Farb-Head-up Display, insbesondere für Fahrzeuge, bei dem das Licht einer Lichtquelle (2) durch eine zumindest teilweise lichtdurchlässige Anzeige (3) gesendet wird und auf eine Scheibe projizierbar ist, **dadurch gekennzeichnet, daß** eine Vielzahl von roten, blauen und grünen Leuchtdioden (10 - 12) ohne Verpackung auf einem gemeinsamen Träger (16, 17, 19) angeordnet sind, **daß** eine Wärmeabfuhrvorrichtung (19) zum Kühlen der Leuchtdioden vorhanden ist.

2. Farb-Head-up Display nach Anspruch 1, **dadurch gekennzeichnet,** die Vielzahl von Leuchtdioden (10, 11, 12) in Form eines kompakten Feldes angeordnet ist.

3. Farb-Head-up Display nach Anspruch 2, **dadurch gekennzeichnet, daß** das kompakte Feld matrixförmig ausgestaltet ist.

4. Farb-Head-up Display nach einem der vorstehenden Ansprüche, **dadurch gekennzeichnet, daß** die Anzahl der Leuchtdioden einer Farbe an die spektrale Empfindlichkeit des Auges und den spektralen Wirkungsgrad der Dioden angepaßt ist.

5. Farb-Head-up Display nach einem der vorstehenden Ansprüche, **dadurch gekennzeichnet, daß** das kompakte Feld eine weitgehend runde Form aufweist.

6. Farb-Head-up Display nach einem der vorstehenden Ansprüche, **dadurch gekennzeichnet, daß** die einzelnen Leuchtdioden (10, 11, 12) als Chippads ausgestaltet sind, die auf einem metallischen Trägermaterialfeld (9) angebracht sind.

7. Farb-Head-up Display nach Anspruch 6, **dadurch gekennzeichnet, daß** jeweils mindestens ein Bonddraht (15) mit dem Chippad (10, 11, 12) und dem Trägermaterialfeld (9) verbunden ist.

8. Farb-Head-up Display nach einem der vorstehenden Ansprüche, **dadurch gekennzeichnet, daß** mehrere Leuchtdioden (10, 11, 12) in Reihe geschaltet sind.

9. Farb-Head-up Display nach Anspruch 8, **dadurch gekennzeichnet, daß** mehrere Leuchtdioden (10, 11, 12) einer Farbe in Reihe geschaltet sind.

10. Farb-Head-up Display nach einem der vorstehenden Ansprüche, **dadurch gekennzeichnet, daß** die zumindest teilweise lichtdurchlässige Anzeige (3) als Flüssigkristalldisplay ausgeschaltet ist.

11. Farb-Head-up Display nach Anspruch 10, **dadurch gekennzeichnet, daß** die Anzeige (3) ein Farbflüssigkristalldisplay ist und **daß** die Lichtquelle (2) gleichzeitig rotes, grünes und blaues Licht aussendet .

12. Farb-Head-up Display nach Anspruch 10, **dadurch gekennzeichnet, daß** das Flüssigkristalldisplay(3) ein Monochrom-Flüssigkristalldisplay ist und **daß** die einzelnen Farben der Leuchtdioden nacheinander in schneller Folge ein- und ausschaltbar sind.

13. Farb-Head-up Display nach einem der vorstehenden Ansprüche, **dadurch gekennzeichnet, daß** zwischen der Lichtquelle (2) und der Anzeige (3) eine Kondensorlinse (7) angeordnet ist.

14. Farb-Head-up Display nach einem der vorstehenden Ansprüche, **dadurch gekennzeichnet, daß** Licht der Leuchtdioden (10 -12) mittels eines oder mehrerer Spiegel reflektiert und durch die Anzeige (3) gesendet wird.

15. Farb-Head-up Display nach einem der vorstehenden Ansprüche, **dadurch gekennzeichnet, daß** es eine oder mehrere Anzeigen (3) und mehrere Lichtquellen (2) aufweist.
